# EUROPEAN PATENT SPECIFICATION

(11) **EP 3 341 619 B1**
(45) Date of publication and mention of the grant of the patent: **16.02.2022**
(21) Application number: 16839680.2
(22) Date of filing: 23.08.2016
(51) Int. Cl.: F16B 39/16, F16B 39/22, F16B 39/24, F16B 39/36, F16B 41/00

(54) **LOCKING ARRANGEMENT FOR A NUT**
VERRIEGELUNGSANORDNUNG FÜR EINE MUTTER
AGENCEMENT DE VERROUILLAGE DESTINÉ À UN ÉCROU

(30) Priority: 25.08.2015 NO 20151077
(43) Date of publication of application: 04.07.2018
(73) Proprietor: Bondura Technology AS, 4340 Bryne (NO)
(72) Inventor: KARLSEN, Øyvind, 4018 Stavanger (NO)
(74) Representative: Håmsø Patentbyrå AS
(86) International application number: PCT/NO2016/050174
(87) International publication number: WO 2017/034414

(56) References cited:
- WO-A1-93/20359
- WO-A1-93/20359
- WO-A1-2008/003919
- WO-A1-2011/065837
- DE-C- 821 444
- DE-C1- 4 126 621
- GB-A- 1 027 677
- GB-A- 2 110 333
- GB-A- 190 913 232
- US-A- 1 155 286
- US-A- 3 885 461
- US-A- 5 190 393
- US-A- 5 209 594

## Description

The invention relates to an arrangement for locking a nut on a pin bolt, as defined in claim 1.

Preventing a nut from loosening from its abutment against an element which is held together with an adjacent element by means of said nut and an associated threaded bolt or the like has been sought to be solved by means of a great number of arrangements, among other things by increasing the friction between the threads of the nut and of the bolt. The most obvious prior art is forming the nut as a clamp nut; that is to say, at least parts of an outward-facing end portion of the nut rest more tightly against the threads of the bolt than the threads of the nut do, typically by the nut being provided with an oval collar portion. A so-called nylock nut includes an integrated synthetic ring, with a smaller diameter than the threads of the nut, at its outward-facing end portion. Further known arrangements for locking a nut include the use of a locking element which engages with both the nut and the bolt, for example a locking pin which has been passed through a radial bore in the bolt and engages with recesses in a so-called castellated nut, or a locking disc which engages, in a rotation-preventing manner, with an axial groove in the bolt, for example, and is bent into abutment against the polygonal jacket of the nut.

Especially to secure large bolt connections, for example pin bolts of the kind described in NO302053 B1, it is impractical to use the arrangements that are described above, as the locking means will be difficult to manufacture or heavy to handle.

It is also known to use a so-called counter-nut, that is to say a second nut being screwed into abutment against a first nut. The counter-nut may have a dimension identical to or smaller than the main nut.

WO9320359A1 discloses a bolt for a swivel link, in which a conical sleeve has been pushed into abutment against a bore and against the conical portion of the bolt by means of a nut, which engages with a threaded end portion of the bolt and with an internal groove of the conical sleeve. A locking plate rests against an end face of the sleeve and is fixed by means of a screw arranged radially offset from the periphery of the sleeve, to prevent the sleeve from rotating and the nut from loosening.

US3885461A discloses means for sealingly securing a piston of a fluid operated linear motor to the piston rod by means which produce a self-tightening effect in response to the rotational forces experienced by such pistons in operation. The piston is threadably engaged on a portion of the rod and one end edge of the piston bites into an adjacent inclined step thereon to provide a seal between the piston and the rod. A flat end face of a lock nut bearing against the flat end face of the piston is threadably engaged on an adjacent portion of the rod which has threads with a finer pitch.

DE821444C discloses a screw or nut lock, in which security against unintentional release is achieved. In one embodiment a threaded bolt carries at its end a right-hand thread of the usual kind. On this thread a normal nut is screwed, the outer ring surface roughened slightly, preferably provided with corrugations. A lock nut consists of an externally closed ring body, which carries a threaded pin with left-hand thread in its axial centre. This threaded pin corresponds to a likewise left-handed bore at the end of the bolt. An inner annular surface of the lock nut is also slightly fluted. In a second embodiment suitable for mounting an element on an axis, the axis carries a right-hand thread, on which a fastening nut is screwed, the outer end face being corrugated. At the end of the axis, a tapered neck with left-hand thread is forged. By loosening of the mounted element provided with right-hand internal threads, the corrugated annular surface of a lock nut is pressed firmly against the corrugated fastening nut end face, preventing a release of the fastening nut.

GB190913232A describes a nut locked to a bolt by a locking-nut inserted in a polygonal recess in the nut. A screw, threaded reversely to the threads on the bolt, has two distinct threads engaging bores in the bolt and in the locking-nut. A space between the threads is slightly wider than the thickness of the locking-nut. The threads on the screw displace the thread on the locking-nut to carry the locking-nut against a shoulder I if the mating threads are not naturally continuous when the looking-nut is pushed home. In a modification, the threads which engage the nut are formed on the enlarged portion of the screw.

GB2110333A discloses a threaded member, e.g. a connecting rod for a brake actuator provided with two adjacent screw threaded portions of like sense but different pitch such as to provide easy locking up of members threaded onto the respective portions, which allows the rod to be turned by means of one of the members. The threaded portions are preferably of different diameters in order that members can be mounted on the member from the same end.

The invention has for its object to remedy or reduce at least one of the drawbacks of the prior art or at least provide a useful alternative to the prior art.

The object is achieved through the features that are specified in the description below and in the claims that follow.

The invention provides an arrangement for locking a nut on a bolt by a nut-locking element being arranged to releasably engage with the bolt and the nut that is in engagement with a first threaded portion of the bolt, on a pin bolt on which a nut is resting against a bearing collar arranged on a conical portion of the pin bolt, in order thereby to expand the bearing collar into abutment against a bore in an element in which the pin bolt is to be held. The bolt includes a second threaded portion, which is concentric with the first threaded portion and has a thread pitch, which is smaller than the thread pitch of the first threaded portion of the bolt. The second thread portion may be formed as internal threads in a bore in an end portion of the bolt or as external threads on a stepped end portion of the bolt. The nut-locking element includes a friction portion which, when resting against a portion of the nut, prevents the nut from rotating independently of the nut-locking element. The friction portion may be formed as an externally cylindrical portion surrounding a conical section of the end portion of the bolt and being expandable, by the abutment of an internal conical portion against the conical section of the bolt end portion, into abutment against a portion of the threads of the nut. Alternatively, the friction portion may be formed on a flanged end portion of the nut-locking element, wherein the friction portion is brought to rest against an external portion of the nut. In this embodiment, the friction portion of the nut-locking element may be formed as an annular collar end face lying in a plane arranged perpendicularly to the centre axis of the nut, or as a conical inward-facing surface. The friction portion may possibly be formed of a circular transition portion between the end face of the collar and an inward-facing collar face, which, in this embodiment variant, may be cylindrical. Correspondingly, the external abutment portion of the nut may be an annular end-portion surface lying in a plane arranged perpendicularly to the centre axis of the nut or being formed as an outward-facing conical surface of the end portion of the nut, or, possibly, the abutment portion consists of a circular transition portion between the end-portion surface of the nut and the outward-facing conical surface, possibly between the end-portion surface of the nut and an external cylinder face of the nut.

The nut-locking element includes a coupling portion arranged in the outward-facing end portion of the nut-locking element for releasable connection to a tool, for example in the form of an external, polygonal end portion or a centric recess with a polygonal cross section.

The invention is defined by the independent claim 1. The dependent claims define advantageous embodiments of the invention.

The second threaded portion may be arranged externally on a stepped end portion of the bolt and may be separated from the first threaded portion by a conical portion, and the nut-locking element may be provided with an internal conical surface which is arranged to rest against the conical portion, and may be encircled by a cylindrical face which, by radial expansion, is arranged to rest supportingly against an encircling part of the nut.

The second threaded portion may alternatively be arranged in a centric, axial recess in the end portion of the bolt, the threaded portion of the nut-locking element may be arranged externally on a pin provided with a flanged end portion, and the friction portion may be arranged near the periphery of the flanged end portion.

In this alternative, the friction portion may be formed as an annular collar end face lying in a plane that is perpendicular to the centre axis of the nut, possibly as an internal conical surface of the flanged end portion, possibly as an edge between two faces of the flanged end portion.

A coupling portion, which is arranged to receive a spanner, may be formed as an end portion with an externally polygonal cross section, or as an end portion with an internally polygonal recess.

The nut is provided with an abutment portion for receiving the friction portion of the nut-locking element, the abutment portion being formed as a stepped or conical end portion of the nut.

In what follows, examples of preferred embodiment are described, which are visualized in the accompanying drawings, in which:
- Figure 1: shows an axial section through a portion of a bolt with a nut that is locked by means of a first embodiment of a nut-locking element;
- Figure 2: shows an axial section through a portion of a bolt with a nut which is locked by means of a second embodiment of the nut-locking element;
- Figure 3: shows an axial section through a portion of a bolt with a nut which is locked by means of a further variant of the second embodiment of the nut-locking element;
- Figure 4: shows an axial section through a portion of a bolt with a nut which is locked by means of yet another variant of the second embodiment of the nut-locking element; and
- Figure 5: shows an axial section through a portion of a bolt with a nut which is locked by means of still another variant of the second embodiment of the nut-locking element.

In the figures, the reference numeral 1 indicates a pin bolt provided with a conical portion 11 arranged to receive a radially expandable bearing collar 2 of a kind known *per se* for mounting in a supporting bore 51 in an element 5. The mounting of the bearing collar 2 is done by it being displaced axially onto the conical portion 11 by a nut 3, which, with a threaded portion 31 of the nut 3, engages with a first threaded portion 121 of an end portion 12 of the pin bolt 1, bearing against an end portion 21 of the bearing collar 2.

A nut-locking element 4 is arranged on the end portion 12 of the pin bolt 1. The nut-locking element 4 engages with a second threaded portion 122 of the end portion 12. The second threaded portion 122 has a smaller thread pitch than the first threaded portion 121. When the nut-locking element 4 has been screwed into abutment against the nut 3, the difference in thread pitch will prevent the nut 3 and the nut-locking element 4 from rotating together in such a way that the abutment of the nut 3 against the bearing collar 2 ceases to exist by the nut 3 loosening.

The connection between the nut 3 and the nut-locking element 4 may be provided in various ways.

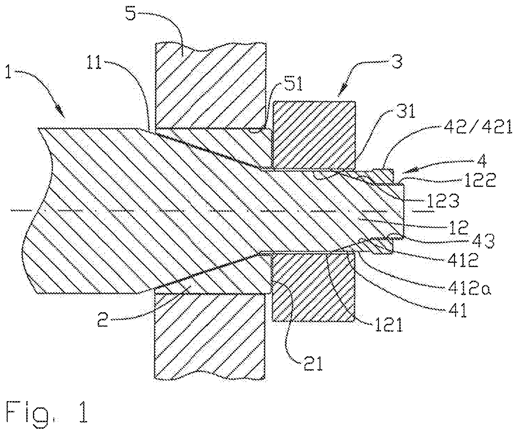

Reference is first made to figure 1, in which a first exemplary embodiment is shown. Here, the end portion 12 of the pin bolt 1 is stepped, and the second threaded portion 122 is arranged outside the first threaded portion 121 and with a smaller diameter than the first threaded portion 121. A conical transition portion 123 is formed between the first and second threaded portions 121, 122 and provides an abutment surface for an internal conical surface 412 of the nut-locking element 4. An external cylinder face 412a encircling the internal conical surface 412 forms a friction portion 41 which, by radial expansion, is arranged to rest against an encircling portion of the threaded portion 31 of the nut 3. The expansion is made possible by the nut-locking element 4 being formed from an elastic material and possibly by one or more splits directed axially (not shown) cutting through the friction portion 41.

In this embodiment, adjacent to the friction portion 41, the nut-locking element 4 is provided with a coupling portion 42 encircling a threaded portion 43 arranged to engage with the threaded portion 122 of the stepped part of the end portion 12. In this embodiment, the coupling portion 42 is provided with an externally polygonal end portion 421.

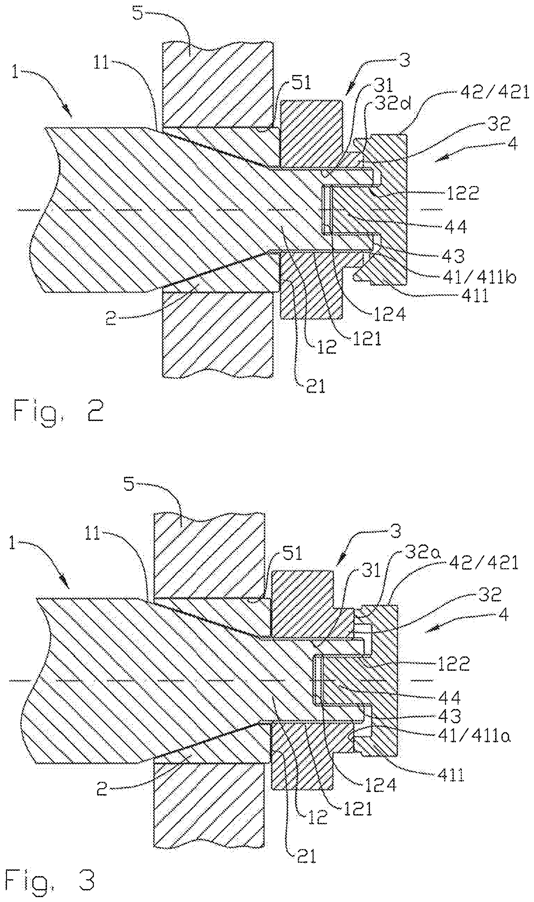

Reference is now made to figures 2, 3, 4 and 5, in which variants of a second embodiment of the invention are shown. Common to the variants of this embodiment are that the second threaded portion 122 of the end portion 12 of the pin bolt 1 is formed internally in a centric recess 124, and that the nut-locking element 4 includes a flanged, circular end portion 411 which, when the nut 3 is being locked, is resting against a circular abutment portion 32 of the nut 3. In this embodiment, the threaded portion 43 of the nut-locking element 4 is provided on a cylindrical pin 44 arranged centrically.

In figure 2, the flanged end portion 411 of the nut-locking element 4 is provided with a friction portion 41 formed as an internal conical surface 411b which rests against a circular edge 32d of an outward-facing stepped abutment portion 32 on the end of the nut 3.

In figure 3, the flanged end portion 411 of the nut-locking element 4 is provided with a friction portion 41 formed as an annular collar end face 411a which lies in a plane perpendicular to the centre axis of the nut-locking element 4 and which abuts against an end face 32a of the outward-facing stepped abutment portion 32 of the nut 3.

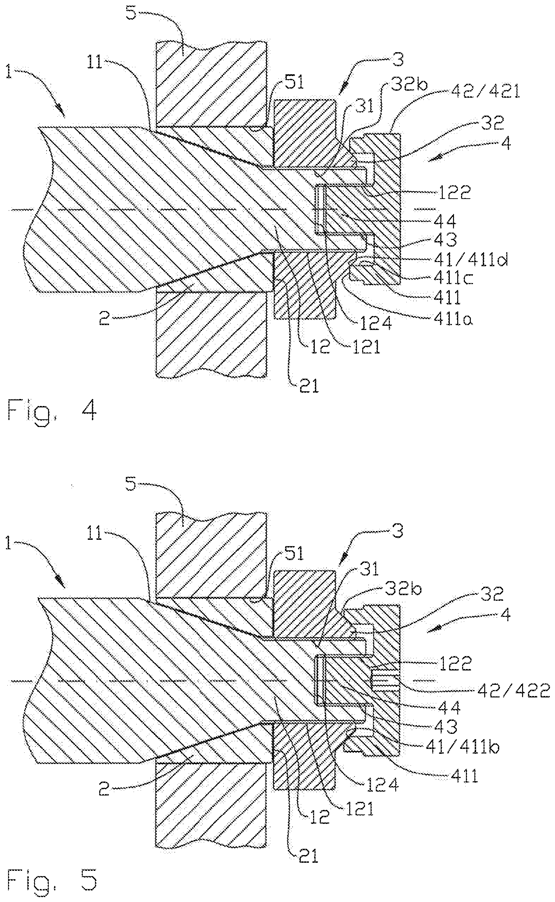

In figure 4, the flanged end portion 411 of the nut-locking element 4 is provided with a friction portion 41 formed of an edge 411d between an annular collar end face 411a and an internal cylinder face 411c, the edge 411d resting against an external conical abutment surface 32b of the outward-facing stepped abutment portion 32 of the nut 3.

In figure 5, the flanged end portion 411 of the nut-locking element 4 is provided with a friction portion 41 formed as an internal conical surface 411b resting against an external conical abutment surface 32b of the outward-facing stepped abutment portion 32 of the nut 3.

The nut-locking elements 4 according to the embodiments shown in figures 2, 3 and 4 are provided with a coupling portion 42 for a spanner (not shown), shown here as an externally polygonal end portion 421. In figure 5, the coupling portion 42 is formed as an internally polygonal end-portion recess 422 arranged centrically in the nut-locking element 4.

When the bearing collar 2 has been fixedly mounted in the supporting bore 51 by means of the nut 3, and the nut-locking element 4 has been fixedly mounted against the nut 3, the smaller thread pitch of the second threaded portion 122 of the pin bolt 1 and the corresponding threaded portion 43 of the nut-locking element 4 will ensure that the nut-locking element 4 is further tightened against the nut 3 if the nut 3 has a tendency to become screwed away from its abutment against the bearing collar 2. Thereby the invention has provided simple and effective securing of the abutment of the nut 3 against the bearing collar.

It should be noted that all the above-mentioned embodiments illustrate the invention, but do not limit it, and persons skilled in the art may construct many alternative embodiments without departing from the scope of the attached claims. In the claims, reference numbers in brackets are not to be regarded as restrictive. The use of the verb "to comprise" and its different forms does not exclude the presence of elements or steps that are not mentioned in the claims. The indefinite article "a" or "an" before an element does not exclude the presence of several such elements.

The fact that some features are indicated in mutually different dependent claims does not indicate that a combination of these features cannot be used with advantage.

## Claims

1. An arrangement for locking a nut (3) on a pin bolt (1) in a bore (51) in an element (5), the arrangement comprising:
- a pin bolt (1) provided with a conical portion (11), a first threaded portion (121), and a second threaded portion (122) which is concentric with and having a smaller thread pitch than the first threaded portion (121);
- a bearing collar (2) for being arranged on said conical portion (11) of the pin bolt (1), said bearing collar (2) having an end face (21) and being radially expandable;
- a nut (3) arranged for abutting against the end face (21) of the bearing collar (2), said nut (3) comprising a threaded portion (31) for being in engagement with the first threaded portion (121) of the pin bolt (1), so that when the nut (3) is tightened against the end face (21) of the bearing collar (2), the bearing collar (2) is caused to expand into abutment against the bore (51) in the element (5); and
- a nut-locking element (4) provided with a threaded portion (43) for engagement with the second threaded portion (122) of the pin bolt (1), and a friction portion (41) for resting supportingly against the nut (3).

2. The arrangement according to claim 1, wherein the pin bolt (1) is further provided with:
- a stepped end portion (12) whereon the second threaded portion (122) is arranged, and
- a conical portion (123) which separates the first threaded portion (121) and the second threaded portion (122), and
wherein the nut-locking element (4) is provided with
- an internal conical surface (412) which is arranged to rest against the conical portion (123), and
- a cylindrical surface (412a) which forms the friction portion which is arranged to rest supportingly against a portion of the threaded portion (31) of the nut (3).

3. The arrangement according to claim 1, wherein the pin bolt (1) is further provided with an end portion (12) having a centric axial recess (124) in which the second threaded portion (122) is arranged, and
wherein the nut-locking element (4) comprises a pin (44) which is provided with a flanged end portion (411), the threaded portion (43) is arranged externally on the pin (44) and the friction portion (41) is arranged near the periphery of the flanged end portion (411).

4. The arrangement according to claim 3, wherein the friction portion (41) is arranged as an annular collar end face (411a) which lies in a plane that is perpendicular to the centre axis of the nut (3).

5. The arrangement according to claim 3, wherein the friction portion (41) is formed as an internal conical surface (411b) of the flanged end portion (411).

6. The arrangement according to claim 3, wherein the friction portion (41) is arranged as an edge (411d) between two faces (411a, 411c) of the flanged end portion (411).

7. The arrangement according to any one of claims 1-6, wherein the nut-locking element further comprises a coupling portion (42) which is arranged to receive a spanner, the coupling portion (42) being an end portion (421) with an externally polygonal cross section or an end portion (422) with an internally polygonal recess.

8. The arrangement according to any one of claims 1 and 3-7, wherein the nut (3) is provided with an abutment portion (32) for receiving the friction portion (41) of the nut-locking element (4), the abutment portion (32) being formed as a stepped or conical end portion on the nut (3).

## Patentansprüche

1. Anordnung zur Verriegelung einer Mutter (3) auf einem Federbolzen (1) in einer Bohrung (51) in einem Element (5), wobei die Anordnung aufweist:
- einen Federbolzen (1), aufweisend einen konischen Abschnitt (11), einen ersten Gewindeabschnitt (121), und einen zweiten Gewindeabschnitt (122), welcher konzentrisch ist mit dem ersten Gewindeabschnitt (121) und eine kleinere Gewindesteigung aufweist als der erste Gewindeabschnitt (121);
- einen Nadelkranz (2) zur Anordnung auf dem besagten konischen Abschnitt (11) des Federbolzens (1), wobei der besagte Nadelkranz (2) eine Endfläche (21) aufweist und radial ausdehnbar ist;
- eine Mutter (3), welche angeordnet ist, um gegen die Endfläche (21) des Nadelkranzes (2) anzuliegen, wobei die besagte Mutter (3) einen Gewindeabschnitt (31) aufweist, zum Eingriff mit dem ersten Gewindeabschnitt (121) des Federbolzens (1), sodass wenn die Mutter (3) gegen die Endfläche (21) des Nadelkranzes (2) angezogen ist, wird der Nadelkranz (2) dazu bewegt, sich bis zum Anliegen gegen die Bohrung (51) im Element (5) auszudehnen; und
- ein Mutter-verriegelndes Element (4), welches einen Gewindeabschnitt (43) aufweist zum Eingriff mit dem zweiten Gewindeabschnitt (122) des Federbolzens (1), und einen Reibungsabschnitt (41) zur stützenden Auflage gegen die Mutter (3).

2. Anordnung gemäss Anspruch 1, wobei der Federbolzen (1) femer aufweist:
- einen gestuften Endabschnitt (12), auf welchem der zweite Gewindeabschnitt (122) angeordnet ist, und
- einen konischen Abschnitt (123), welcher den ersten Gewindeabschnitt (121) und den zweiten Gewindeabschnitt (122) trennt, und wobei das Mutter-verriegelnde Element (4)
- eine innere konische Fläche (412) aufweist, welche angeordnet ist, um gegen den konischen Abschnitt (123) anzuliegen, und
- eine zylindrische Oberfläche (412a) aufweist, welche den Reibungsabschnitt bildet, welcher angeordnet ist, um stützend gegen einen Abschnitt des Gewindeabschnittes (31) der Mutter (3) anzuliegen.

3. Anordnung gemäss Anspruch 1, wobei der Federbolzen (1) ferner einen Endabschnitt (12) aufweist, welcher eine zentrische axiale Ausnehmung (124) aufweist, in welcher der zweite Gewindeabschnitt (122) angeordnet ist, und wobei das Mutter-verriegelnde Element (4) einen Stift (44) aufweist, welcher mit einem geflanschten Endabschnitt (411) ausgestattet ist, wobei der Gewindeabschnitt (43) aussen auf dem Stift (44) angeordnet ist, und wobei der Reibungsabschnitt (41) in der Nähe der Peripherie des geflanschten Endabschnittes (411) angeordnet ist.

4. Anordnung gemäss Anspruch 3, wobei der Reibungsabschnitt (41) als eine ringförmige Kragenendfläche (411a) ausgebildet ist, welche in einer Ebene liegt, welche rechtwinklig zur Mittelachse der Mutter (3) liegt.

5. Anordnung gemäss Anspruch 3, wobei der Reibungsabschnitt (41) als eine innere konische Fläche (411b) des geflanschten Endabschnittes (411) ausgebildet ist.

6. Anordnung gemäss Anspruch 3, wobei der Reibungsabschnitt (41) als eine Kante (411d) zwischen zwei Flächen (411a, 411c) des geflanschten Endabschnittes (411) angeordnet ist.

7. Anordnung gemäss einem der Ansprüche 1-6, wobei das Mutter-verriegelnde Element ferner einen Kopplungsabschnitt (42) aufweist, welcher angeordnet ist, um einen Schraubenschlüssel aufzunehmen, wobei der Kopplungsabschnitt (42) ein Endabschnitt (421) mit einem äusseren polygonalen Querschnitt ist, oder ein Endabschnitt (422) mit einer inneren polygonalen Ausnehmung ist.

8. Anordnung gemäss einem der Ansprüche 1 und 3-7, wobei die Mutter (3) einen Anlageabschnitt (32) aufweist, zur Aufnahme des Reibungabschnittes (41) des Mutter-verriegelnden Elements (4), wobei der Anlageabschnitt (32) als ein gestufter oder konischer Endabschnitt auf der Mutter (3) ausgebildet ist.

## Revendications

1. Un agencement pour verrouiller un écrou (3) sur un boulon à broche (1) dans un alésage (51) dans un élément (5), l'agencement comprenant:
- un boulon à broche (1) muni d'une partie conique (11), une première partie filetée (121), une seconde partie filetée (122), qui est concentrique avec et a un pas de filetage plus petit que la première partie filetée (121),
- un collier de roulement (2) pour être agencé sur ladite partie conique (11) du boulon à broche (1), ledit collier de roulement (2) ayant une face d'extrémité (21) et étant radialement expansible,
- un écrou (3) agencé pour venir en butée contre la face d'extrémité (21) du collier de roulement (2), ledit écrou (3) comprenant une partie filetée (31) pour s'engager avec une première partie filetée (121) du boulon à broche (1), de sorte que lorsque l'écrou (3) est serré contre la face d'extrémité (21) du collier de roulement (2), le collier de roulement (2) est amené à expanser en butée contre l'alésage (51) dans l'élément (5), et
- un élément de verrouillage d'écrou (4) pourvu d'une partie filetée (43) pour s'engager avec la seconde partie filetée (122) du boulon à broche (1), et d'une partie de friction (41) pour reposer en appui contre l'écrou (3).

2. L'agencement selon la revendication 1, dans lequel boulon à broche (1) est pourvu en outre de
- une partie d'extrémité étagée (12) sur laquelle la seconde partie filetée (122) est disposée,
- une partie conique (123) qui sépare la première partie filetée (121) et la seconde partie filetée (122), et
dans lequel l'élément de verrouillage d'écrou (4) est pourvu
- d'une surface conique interne (412) qui est agencée pour reposer contre la partie conique (123), et
- une surface cylindrique (412a) qui forme la partie de friction qui est agencée pour reposer en appui contre une partie de la partie filetée (31) de l'écrou (3).

3. L'agencement selon la revendication 1, dans lequel le boulon à broche (1) est pourvu en outre d'une partie d'extrémité (12) ayant un évidement axial centré (124) dans lequel la seconde partie filetée (122) est agencée, et dans lequel l'élément de verrouillage d'écrou (4) comprend une broche (44) qui est pourvue d'une partie d'extrémité à bride (411), la partie de filetage (43) est agencée en externe sur la broche (44) et la partie de friction (41) est disposée près de la périphérie de la partie d'extrémité à bride (411).

4. L'agencement selon la revendication 3, dans lequel la partie de friction (41) est agencée comme une face d'extrémité de collerette annulaire (411a) qui se situe dans un plan qui est perpendiculaire à l'axe central de l'écrou (3).

5. L'agencement selon la revendication 3, dans lequel la partie de friction (41) est formée comme une surface conique interne (411b) de la partie d'extrémité à bride (411).

6. L'agencement selon la revendication 3, dans lequel la partie de friction (41) est agencée comme un bord (411d) entre deux faces (411a, 411c) de la partie d'extrémité à bride (411).

7. L'agencement selon l'une quelconque des revendications 1 à 6, dans lequel l'élément de verrouillage d'écrou (4) comprend en outre une partie d'accouplement (42) qui est agencée pour recevoir une clé, la partie d'accouplement (42) étant une partie d'extrémité (421) avec une section transversale polygonale extérieure ou une partie d'extrémité (422) avec un évidement polygonal intérieur.

8. L'agencement selon l'une quelconque des revendications 1 et 3 à 7, dans lequel l'écrou (3) est pourvu d'une partie de butée (32) pour recevoir la partie de friction (41) de l'élément de verrouillage d'écrou (4), la partie de butée (32) étant formée comme un partie d'extrémité étagée ou conique sur l'écrou (3).
